# EUROPÄISCHE PATENTSCHRIFT

(11) **EP 0 757 824 B1**
(45) Veröffentlichungstag und Bekanntmachung des Hinweises auf die Patenterteilung: **17.11.2004**
(21) Anmeldenummer: 95911211.1
(22) Anmeldetag: 07.03.1995
(51) Int. Cl.: G06K 19/077

(54) **CHIPKARTE**
CHIP CARD
CARTE A MEMOIRE

(30) Priorität: 27.04.1994 DE 4414731; 24.11.1994 DE 4441931
(43) Veröffentlichungstag der Anmeldung: 12.02.1997
(73) Patentinhaber: Infineon Technologies AG, 81669 München (DE)
(72) Erfinder: KIRSCHBAUER, Josef, D-93476 Blaibach (DE); HOPF, Erich, D-93069 Köfering (DE); GRÖNNINGER, Günther, D-92358 Seubersdorf (DE); FISCHER, Jürgen, D-93180 Deuerling (DE); DIDSCHIES, Günter, D-90427 Nürnberg (DE); MUNDIGL, Josef, D-93152 Nittendorf (DE); ROGALLI, Michael, D-84056 Rottenburg (DE)
(74) Vertreter: Epping Hermann & Fischer
(86) Internationale Anmeldenummer: PCT/DE1995/000312
(87) Internationale Veröffentlichungsnummer: WO 1995/029460

(56) Entgegenhaltungen:
- EP-A- 0 344 058
- EP-A- 0 456 323
- EP-A- 0 527 438
- PATENT ABSTRACTS OF JAPAN vol. 014 no. 469 (M-1034) ,12.Oktober 1990 & JP,A,02 188298 (DAINIPPON PRINTING CO LTD) 24.Juli 1990,

## Beschreibung

Die Erfindung bezieht sich auf eine Chipkarte gemäß dem Oberbegriff des Patentanspruchs 1. Eine Chipkarte mit diesen Merkmalen ist aus der EP 0 344 056 A1 bekannt.

Eine andere Chipkarte ist aus der EP 0 254 640 B1 bekannt. Bei dieser bekannten Chipkarte sind die Kontaktfahnen Teile eines Leadframe, in dessen Mitte der Halbleiterchip angeordnet und mittels Bonddrähte mit den Kontaktfahnen elektrisch verbunden ist. Der Halbleiterchip und die Bonddrähte sind von einer schützenden Kunststoffmasse umgeben, aus der die Kontaktfahnen hervorstehen. Die Kontaktfahnen sind mit der Plastikkarte dadurch verbunden, daß in Befestigungslöcher der Kontaktfahnen ragende Befestigungsspitzen der Plastikkarte derart thermisch verformt wurden, daß die Kontaktfahnen gehalten werden. Die den Halbleiterchip schützende Kunststoffmasse füllt dabei den gesamten Raum zwischen dem Halbleiterchip und der Plastikkarte aus und dient auch als zusätzliches Befestigungsmittel für die Kontaktfahnen.

Es sind jedoch auch Chipkarten bekannt, bei denen die Kontaktfahnen als Kupferlaminat auf einer Kunststoffolie ausgebildet sind. Die Kontaktfahnen sind hierbei über die Kunststoffolie mit der Platikkarte verbunden.

Chipkarten sind im täglichen Gebrauch einer erheblichen Biegebelastung ausgesetzt und müssen aus diesem Grund strengen Tests standhalten. Das bedeutet, daß bei einer hohen Zahl von Biegungen weder der Chip zerstört werden darf noch die Bonddrähte abreißen dürfen noch sich die Kontaktfahnen von der Plastikkarte lösen dürfen. Bei der bekannten Chipkarte ist zwar aufgrund der speziellen Befestigung der Kontaktfahnen
die Gefahr, daß sich diese von der Plastikkarte ablösen gering, jedoch ist die Gefahr, daß die Kontaktfahnen aufgrund dieser Befestigung bei starker Biegung reißen, sehr groß.

Auch bei den Chipkarten, bei denen die Kontaktfahnen auf einer Kunststoffolie auflaminiert sind und ein Trägermodul bilden, ist bei großflächigen und steifen Modulen die Gefahr, daß diese brechen, sehr groß.

Aufgabe der Erfindung ist es somit, eine Chipkarte anzugeben, bei der die Gefahr des Abreißens der Kontaktfahnen oder des Brechens des Trägermoduls vermieden wird, ohne daß es zu einer Ablösung der Kontaktfahnen von der Plastikkarte kommt.

Die Aufgabe wird bei einer gattungsgemäßen Chipkarte dadurch gelöst, daß der flexible Bereich dehnbar ist. Zur Verbesserung der Biegebelastbarkeit der Chipkarte weisen die Kontaktfahnen nahe dem Kunststoffkörper einen dehnbaren flexiblen Bereich auf. Dieser dehnbare flexible Bereich kann eine Dehnungssicke oder ein mäanderförmig verlaufender dünner Steg sein. Besonders vorteilhaft ist es, wenn beispielsweise zumindest ein dünner, kurzer Steg aus dehnbarem Material diesen flexiblen Bereich bildet.

Die Art der Verbindung zwischen Kontaktfahnen und Plastikkarte, mittels eines aus zumindest drei Schichten bestehenden Klebemittels, hat den Vorteil, daß bei Biegebeanspruchung der Chipkarte die mittlere, flexible Schicht des Klebemittels nachgeben kann und somit trotz fester Verbindung zwischen Plastikkarte und Kontaktfahnen die Gefahr, daß die Kontaktfahnen abreißen, beseitigt ist.

In vorteilhafter Weiterbildung der Erfindung sind die Randschichten des Klebemittels mit Heißklebestoff gebildet. Das hat den Vorteil, daß das Klebemittel bei Zimmertemperatur einen festen Aggregatzustand aufweist und somit leicht gehandhabt werden kann, beispielsweise in Bandform oder als vorgestanzte Preform zur Verfügung gestellt werden kann.
In weiterer vorteilhafter Ausbildung der Erfindung sind die Randschichten des Klebemittels in ihren Klebeeigenschaften den zu verbindenden Materialien, beispielsweise Metall und Plastik, angepaßt.

Besonders vorteilhaft ist bei der Erfindung, daß die Kontaktfahnen Teile eines Leadframe sind, d. h. einer Gesamtheit von Leitern, die zunächst über einen Rahmen zusammenhängen und durch Ausstanzen aus dem Rahmen voneinander getrennt werden können. Ein solcher Leadframe hat gegenüber den heute gebräuchlichen kupferlaminierten Kunststoffträgern den Vorteil wesentlich geringerer Kosten.

Um den Halbleiterchip insbesondere die ihn mit den Kontaktfahnen elektrisch verbindenden Bonddrähte zu schützen, kann er von einem Kunststoffkörper umgeben sein. Dazu wird er in vorteilhafter Weise mit Hilfe einer Gießform eingegossen.

Die Abmessungen einer Ausnehmung in der Plastikkarte und des Kunststoffkörper sind dabei erfindungsgemäß derart, daß der Kunststoffkörper auch bei Biegung der Karte keinen direkten Kontakt mit der Plastikkarte hat, daß er also schwimmend mittels der Kontaktfahnen aufgehängt ist. Dadurch kann weder der Chip noch der Kunststoffkörper durch Druckeinwirkung zerstört werden. Die Ausnehmung sollte dabei derart gestaltet sein, daß auch bei Biegung der Karte kein Druck durch beispielsweise eine Kante der Ausnehmung auf die Kontaktfahnen ausgeübt wird.

Die Erfindung wird nachfolgend anhand von Ausführungsbeispielen mit Hilfe von Figuren näher beschrieben. Dabei zeigen:
- Figur 1: einen Querschnitt durch eine Chipkarte,
- Figur 2: eine Draufsicht auf einen Chipkartenmodul,
- Figur 3: eine Seitenansicht eines Chipkartenmoduls und
- Figur 4: eine Draufsicht auf einen Chipkartenmodul.

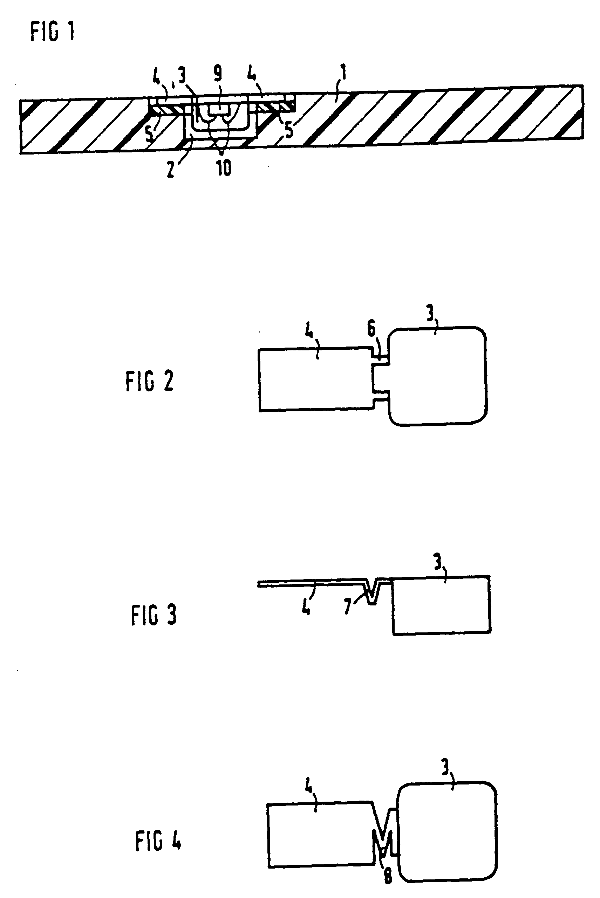

Figur 1 zeigt eine Chipkarte, bei der in die Kartentasche 2 einer Plastikkarte 1 ein Chipkartenmodul eingebracht ist. Der Chipkartenmodul besteht aus einem Kunststoffkörper 3, an dem eine Mehrzahl von Kontaktfahnen 4 angeordnet sind. In dem Kunststoffkörper 3 befindet sich ein Halbleiterchip 9, der mit den Kontaktfahnen 4 mittels Bonddrähten 10 elektrisch verbunden ist.

Die Herstellung eines solchen Chipkartenmoduls erfolgt dabei üblicherweise derart, daß ein Halbleiterchip 9 auf ein, die Kontaktfahnen 4 umfassendes Leadframe geklebt und anschließend mittels Bonddrähten elektrisch mit den Kontaktfahnen 4 verbunden wird. Dann werden der Halbleiterchip 9 und die Bonddrähte 10 in Kunststoff eingegossen oder mit Kunststoff umspritzt. Der Kunststoffkörper 3 mit den somit daran befestigten Kontaktfahnen 4 werden anschließend aus dem Rahmen ausgestanzt und in erfindungsgemäßer Weise mittels eines Mehrschichtklebemittels 5 in die Kartentasche 2 einer Plastikkarte 1 eingeklebt. Dabei weist das Mehrschichtklebemittel 5 eine mittlere flexible Schicht auf, die bei Biegebelastung der Plastikkarte 1 eine Kraftübertragung von der Plastikkarte 1 auf die Kontaktfahnen 4 mindern soll, damit die Kontaktfahnen 4 nicht abreißen.

Das Klebemittel 5 ist dabei vorzugsweise aus drei Schichten aufgebaut, wobei die mittlere, flexible Schicht beispielsweise aus aufgeschäumten Polyethylen oder Polymethan bestehen kann. Sie ist vorzugsweise 40 µm dick. Auf beiden Seiten dieser flexiblen Schicht befindet sich jeweils eine vorzugsweise 20 µm dicke Klebeschicht, wobei dafür in vorteilhafter Weise Heißkleber verwendet werden, da diese bei Zimmertemperatur einen festen Aggregatzustand aufweisen und somit leicht handhabbar sind. Es können beispielsweise Schmelzhaftklebstoffe wie Styrol-Isopren-Styrolblockpolymer oder Styrol-Butadien-Styrolblockcopolymer oder Schmelzklebstoffe wie z. B. Polyamide oder Polymethane verwendet werden.

Diese Klebemittel können beispielsweise in Bandform vorliegen. Aus einem solchen Band können an die Kartentasche 2 der Plastikkarte und an die Abmessungen des Chipkartenmoduls angepaßte Preforms ausgestanzt werden, die dann mittels eines beheizten Formstempels in die Kartentasche 2 eingeklebt werden. Anschließend wird dann der Chipkartenmodul ebenfalls mittels eines beheizten Stempels eingeklebt.

Es ist aber auch möglich, das Klebeband bereits auf das Leadframe aufzukleben, wobei jedoch vorher Ausnehmungen für den Kunststoffkörper ausgestanzt werden müssen. Das Klebeband kann anschließend zusammen mit dem Chipkartenmodul aus dem Leadframe ausgestanzt werden.

Um die Gefahr des Abreißens der Kontaktfahnen 4 weiter zu vermindern, können neben dem Kunststoffkörper 3 an den Kontaktfahnen 4 ein flexibler Bereich vorgesehen werden. Die Figuren 2, 3 und 4 zeigen Beispiele, wie diese flexiblen Bereiche gestaltet werden können. Die Draufsicht auf ein Chipkartenmodul gemäß Figur 2 zeigt einen Kunststoffkörper 3 mit nur einer Kontaktfahne 4, die über zwei dünne Stege 6 mit dem Kunststoffkörper 3 und damit mit dem sich in diesem befindenden Halbleiterchip verbunden ist. Die Kontaktfahne 4 und die Stege 6 sind aus dehnbarem Material, so daß diese Stege eine gewisse Zugbelastung, die aufgrund einer Biegebelastung der Chipkarte auftritt, auffangen. Normalerweise sind entweder sechs oder acht Kontaktfahnen bei einem Chipkartenmodul vorgesehen, die an zwei Seiten des Chipkartenmoduls angeordnet sind, wobei vor allem bei den äußeren Kontaktfahnen die Gefahr des Abreißens groß ist. Der Einfachheit halber ist in den Figuren jedoch nur eine Kontaktfahne dargestellt.

Die Seitenansicht eines Chipkartenmoduls gemäß Figur 3 zeigt eine durch eine Dehnungssicke 7 gebildeten Bereich der Kontaktfahne 4. In der Draufsicht auf einen Chipkartenmodul der Figur 4 ist ein dünner, mäanderförmiger Steg 8 gezeigt, der die Kontaktfahne 4 mit den Kunststoffkörper 3 verbindet.

## Patentansprüche

1. Chipkarte, gebildet mit einer Plastikkarte (1), in der ein von einem Kunststoffkörper (3) umgebener Halbleiterchip angeordnet ist, wobei der Halbleiterchip mit Kontaktfahnen (4) elektrisch verbunden ist, und die Kontaktfahnen (4) mit der Plastikkarte (1) mittels eines aus zumindest 3 Schichten bestehenden Klebemittels (5) verbunden sind, wobei die mittlere Schicht des Klebemittels (5) aus flexiblem Material gebildet ist, wobei die Kontaktfahnen (4) Teile eines Leadframe sind und nahe dem Kunststoffkörper (3) und außerhalb von ihm einen flexiblen Bereich (6; 7; 8) aufweisen, der nicht vom Klebemittel (5) bedeckt ist,
**dadurch gekennzeichnet,**
**daß** der flexible Bereich (6; 7; 8) dehnbar ist.

2. Chipkarte nach Anspruch 1, **dadurch gekennzeichnet, daß** der flexible Bereich durch eine Dehnungssicke (7) gebildet ist.

3. Chipkarte nach Anspruch 1, **dadurch gekennzeichnet, daß** der flexible Bereich mit mindestens einem dünnen Steg aus dehnbarem Material (6) gebildet ist.

4. Chipkarte nach Anspruch 1, **dadurch gekennzeichnet, daß** der flexible Bereich durch einen mäanderförmig verlaufenden dünnen Steg (8) gebildet ist.

5. Chipkarte nach einem der Ansprüche 1 bis 4, **dadurch gekennzeichnet, daß** die Randschichten des Klebemittels (5) von Heißklebstoffen gebildet sind.

6. Chipkarte nach einem der Ansprüche 1 bis 5, **dadurch gekennzeichnet, daß** die Randschichten des Klebemittels (5) in ihren Klebeeigenschaften den zu verbindenden Materialien angepaßt sind.

7. Chipkarte nach einem der Ansprüche 1 bis 6, **dadurch gekennzeichnet, daß** die Kontaktfahnen (4) Teile eines Leadframe sind.

8. Chipkarte nach einem der Ansprüche 1 bis 7, **dadurch gekennzeichnet, daß** der Kunststoffkörper (3) keinen direkten Kontakt mit der Plastikkarte (1) hat.

## Claims

1. Chip card, formed by a plastic card (1), in which a semiconductor chip surrounded by a plastic body (3) is arranged, the semiconductor chip being electrically connected to contact tabs (4) and the contact tabs (4) being connected to the plastic card (1) by means of an adhesive (5) comprising at least 3 layers, the middle layer of the adhesive (5) being formed by flexible material, the contact tabs (4) being parts of a leadframe and having close to the plastic body (3) and outside it a flexible region (6; 7; 8) which is not covered by the adhesive (5), **characterized in that** the flexible region (6; 7; 8) is extensible.

2. Chip card according to Claim 1, **characterized in that** the flexible region is formed by an expansion bead (7).

3. Chip card according to Claim 1, **characterized in that** the flexible region is formed by at least one thin web of extensible material (6).

4. Chip card according to Claim 1, **characterized in that** the flexible region is formed by a meandering thin web (8).

5. Chip card according to one of Claims 1 to 4, **characterized in that** the outer layers of the adhesive (5) are formed by hot-melt adhesives.

6. Chip card according to one of Claims 1 to 5, **characterized in that** the outer layers of the adhesive (5) are adapted in their adhesive properties to the materials to be connected.

7. Chip card according to one of Claims 1 to 6, **characterized in that** the contact tabs (4) are parts of a leadframe.

8. Chip card according to one of Claims 1 to 7, **characterized in that** the plastic body (3) has no direct contact with the plastic card (1).

## Revendications

1. Carte à puce formée d'une carte (1) en plastique, dans laquelle est disposée une puce à semi-conducteur entourée d'une pièce (3) en matière plastique, la puce à semi-conducteur étant reliée électriquement à des oreilles de contact et les oreilles (4) de contact étant reliées à la carte (1) en matière plastique au moyen d'un agent (5) adhésif constitué d'au moins trois couches, la couche intermédiaire de l'agent (5) adhésif étant en une matière souple, l'oreille (4) de contact faisant partie d'une grille de connexion et ayant à proximité de la pièce (3) en matière plastique et à l'extérieur de celle-ci une partie (6 ; 7 ; 8) souple qui n'est pas revêtue de l'agent (5) adhésif,
**caractérisée en ce que**
la partie (6 ; 7 ; 8) souple est extensible.

2. Carte à puce suivant la revendication 1, **caractérisée en ce que** la partie souple est formée par une moulure (7) de dilatation.

3. Carte à puce suivant la revendication 1, **caractérisée en ce que** la partie souple est formée par au moins une barrette mince en une matière (6) extensible.

4. Carte à puce suivant la revendication 1, **caractérisée en ce que** la partie souple est formée par une barrette (8) mince s'étendant de manière sinueuse.

5. Carte à puce suivant l'une des revendications 1 à 4, **caractérisée en ce que** les couches de bord de l'agent (5) adhésif sont formées de substances qui collent à chaud.

6. Carte à puce suivant l'une des revendications 1 à 5, **caractérisée en ce que** les propriétés de collage des couches de bord de l'agent (5) adhésif sont adaptées à celles des matériaux à relier.

7. Carte à puce suivant l'une des revendications 1 à 6, **caractérisée en ce que** les oreilles (4) de contact font partie d'une grille de connexion.

8. Carte à puce suivant l'une des revendications 1 à 7, **caractérisée en ce que** la pièce (3) en matière plastique n'a pas de contact direct avec la carte (1) en matière plastique.
